# EUROPÄISCHE PATENTANMELDUNG

(11) **EP 1 621 765 A2**
(43) Veröffentlichungstag der Anmeldung: **01.02.2006**
(21) Anmeldenummer: 05106753.6
(22) Anmeldetag: 22.07.2005
(51) Int. Cl.: F02M 61/16, B01D 29/90

(54) **Filterelement und Filtervorrichtung**

(30) Priorität: 30.07.2004 DE 102004037035
(71) Anmelder: SIEMENS AKTIENGESELLSCHAFT, 80333 München (DE)
(72) Erfinder: Bentz, Rainer, 66606, St. Wendel (DE); Gerber, Wolfgang, 84085, Langquaid (DE); Koch, Hans-Jörg, 84069, Schierling/Unterdeggenbach (DE); Kuschel, Alexander, 09599, Freiberg (DE); Mayer, Hanspeter, 93055, Regensburg (DE); Neumaier, Martin, 93059, Regensburg (DE); Rink, Jürgen, 92442, Wackersdorf (DE)

(57) **Zusammenfassung**

Ein Filterelement (9) umfasst ein Sieb zum Abscheiden von festen Partikeln aus strömenden Medien. Ein innerer Bereich einer anströmseitigen Oberfläche des Siebs ist gegenüber einem Randbereich der anströmseitigen Oberfläche des Siebs entgegen einer Strömungsrichtung erhaben ausgebildet. Eine Filtervorrichtung umfasst einen Strömungskanal und mindestens ein Filterelement (9), das so in dem Strömungskanal angeordnet ist, dass das strömende Medium durch das Filterelement (9) strömt. Der Strömungskanal ist anströmseitig des Filterelements (9) ausgebildet zum Erzeugen einer tangentialen Strömungskomponente auf einer anströmseitigen Oberfläche des Filterelements (9).

## Beschreibung

Die Erfindung betrifft ein Filterelement mit einem Sieb zum Abscheiden von festen Partikeln aus strömenden Medien und eine Filtervorrichtung, die einen Strömungskanal und mindestens ein Filterelement umfasst.

Die zunehmenden Anforderungen an die Präzision von hydraulischen oder pneumatischen Vorrichtungen machen Maßnahmen erforderlich, die sicherstellen, dass die fluidförmigen oder gasförmigen Medien frei sind von festen Partikeln, die vorgegebene Abmessungen überschreiten. So sind z.B. Ventile, insbesondere Ventile mit piezokeramischem Antrieb oder Aktor, mit einem Hub von weniger als einem Millimeter empfindlich gegenüber Partikeln, die einige Mikrometer groß sind. Wenn sich solche Partikel in dem Ventil oder in der Auslassöffnung des Ventils verklemmen, können diese ein vollständiges Schließen des Ventils verhindern, so dass das Ventil undicht ist, oder eine Schädigung hervorrufen, die das vollständige Schließen des Ventils dauerhaft verhindert. Solche störenden Partikel können bereits während der Herstellung oder der Montage der hydraulischen oder pneumatischen Systeme entstehen oder in die Systeme gelangen und im späteren Betrieb durch das strömende Medium weitertransportiert werden. Feste Partikel müssen deshalb vor dem Eintritt in empfindliche Komponenten, wie zum Beispiel Pumpen oder Ventile, aus dem strömenden Medium herausgefiltert werden. Partikel, die sich im Verlauf der Benutzung in oder an dem Filter ablagern und die Poren des Filters verstopfen, können jedoch den Durchfluss des strömenden Mediums beeinträchtigen.

Zum Filtern fluidförmiger Medien sind Spalt- oder Stabfilter bekannt, die einige wenige längliche Spalten aufweisen, durch die das Fluid fließen kann. Der Nachteil dieses Filters ist, dass in Strömungsrichtung ausgerichtete längliche oder flache Partikel das Filter passieren können. Der Durchfluss durch das Filter wird zunehmend beeinträchtigt durch in den Spalten des Filters abgelagerte Partikel. Außerdem ist die Herstellung dieses Filters teuer, da die Spalten durch spanende Bearbeitung in das Filter eingebracht werden.

In der DE 102 38 569 A1 ist ein Injektor für ein KraftstoffEinspritzsystem eines Verbrennungsmotors sowie eine Filtervorrichtung offenbart. Der Injektor und die Filtervorrichtung umfassen ein Siebfilter, das topfförmig ausgebildet ist und eine Vielzahl kleinster Bohrungen aufweist, die über den Umfang verteilt sind. Der Durchmesser der Bohrungen ist nicht größer als 0,1 Millimeter.

Die EP 0 999 363 A1 offenbart ein Filter, das eine Scheibe umfasst, in der eine Vielzahl von Bohrungen eingebracht sind. Jede Bohrung umfasst einen anströmseitigen und einen abströmseitigen Bereich. Der anströmseitige Bereich ist groß und tief ausgebildet, der abströmseitige Bereich klein und flach. Das Filter ist schräg zur Strömungsrichtung angeordnet, so dass die zur Verfügung stehende Filteroberfläche gegenüber einem senkrecht zur Strömungsrichtung angeordneten Filter vergrößert ist und angeströmte Partikel nicht senkrecht zur Oberfläche des Filters auftreffen.

Die DE 25 41 383 A1 offenbart ein Verfahren zum Herstellen von Filterkörpern für gasförmige oder flüssige Medien. Ein Filterhohlkörper wird aus einem oder mehreren Drahtgewebestreifen, Drahtgewebebahnen oder mit Löchern versehenen Blechen mehrlagig gewickelt und anschließend gesintert. Dadurch entsteht eine stoffschlüssige Verbindung zwischen den Gewebelagen. Der Filterhohlkörper kann durch Auftrennen zu einer mehrlagigen Filterplatte verformt werden.

Die Aufgabe der Erfindung ist, ein Filterelement zu schaffen, das einfach ist und dauerhaft zuverlässig ist. Ferner ist die Aufgabe der Erfindung, eine Filtervorrichtung zu schaffen, die einfach ist und dauerhaft zuverlässig ist.

Die Aufgabe wird gelöst durch die Merkmale der unabhängigen Patentansprüche. Vorteilhafte Weiterbildungen der Erfindung sind in den Unteransprüchen gekennzeichnet.

Gemäß eines ersten Aspekts zeichnet sich die Erfindung aus durch ein Filterelement mit einem Sieb zum Abscheiden von festen Partikeln aus strömenden Medien. Ein innerer Bereich einer anströmseitigen Oberfläche des Siebs ist gegenüber einem Randbereich der anströmseitigen Oberfläche des Siebs entgegen einer Strömungsrichtung erhaben ausgebildet. Dadurch sammeln sich abgeschiedene Partikel bevorzugt in dem Randbereich des Siebs. In dem inneren Bereich des Siebs setzen sich nur wenige Partikel ab, so dass die Durchströmung des Siebs nur wenig beeinträchtigt wird. Dadurch wird ein dauerhaft geringer Durchflusswiderstand und Druckabfall über dem Filterelement erreicht. Weitere Vorteile sind, dass die Stabilität und die wirksame Filteroberfläche durch die erhabene Ausbildung des inneren Bereichs der anströmseitigen Oberfläche des Siebs im Vergleich zu einem Sieb, dessen anströmseitige Oberfläche eben ausgebildet ist, vergrößert ist. Aufgrund einer geringeren Verstopfungsgefahr muss außerdem weniger zusätzliche Filteroberfläche vorgehalten werden, um einen dauerhaft guten Durchfluss durch das Filterelement zu ermöglichen. Dadurch verringert sich der Platzbedarf für das Filterelement. Außerdem ist ein solches Filterelement billiger herstellbar als beispielsweise ein Spalt- oder Stabfilter, da das Filterelement beispielsweise durch Ausstanzen und Prägen hergestellt werden kann und keine spanende Bearbeitung erfordert.

In einer vorteilhaften Ausgestaltung des Filterelements ist das Sieb in axialer und/oder in radialer Richtung symmetrisch ausgebildet, d.h. das Sieb ist symmetrisch zu einer Ebene und/oder symmetrisch zu einer Achse ausgebildet. Der Einbau ist dadurch produktionstechnisch einfacher, da die rotatorische oder axiale Einbaurichtung des Siebs keinen Einfluss auf die Filterwirkung hat und entsprechend nicht berücksichtigt werden muss.

In einer weiteren vorteilhaften Ausgestaltung des Filterelements ist die anströmseitige Oberfläche des Siebs gewölbt ausgebildet. Dies hat den Vorteil, dass ein solches Filterelement sehr einfach und billig herstellbar ist, beispielsweise durch Ausstanzen und anschließendes Umformen, z.B. durch Prägen. Außerdem kann eine gewölbte Oberfläche strömungsgünstig ausgebildet sein, so dass abgeschiedene Partikel durch die Strömung zum Rand gespült werden.

In einer weiteren vorteilhaften Ausgestaltung des Filterelements ist die anströmseitige Oberfläche des Siebs kegelförmig ausgebildet. Ein solches Filterelement ist ebenfalls einfach und billig herstellbar und kann ebenfalls strömungsgünstig sein, so dass abgeschiedene Partikel durch die Strömung zum Rand gespült werden.

In einer weiteren vorteilhaften Ausgestaltung des Filterelements ist die anströmseitige Oberfläche des Siebs becherförmig ausgebildet, d.h. die anströmseitige Oberfläche des Siebs hat eine im Wesentlichen zylindrische Form. Auch diese Ausgestaltung ist einfach und billig herstellbar und ermöglicht außerdem eine besonders große wirksame Filteroberfläche.

In einer weiteren vorteilhaften Ausgestaltung des Filterelements umfasst das Sieb mindestens zwei poröse Lagen. Ein mehrlagiger Aufbau des Filterelements hat den Vorteil, dass die einzelnen Lagen unterschiedliche Funktionen übernehmen können, zum Beispiel primär eine Stützfunktion und/oder eine Filterfunktion. Durch eine geeignete Kombination mehrerer Lagen können gewünschte Eigenschaften des Filterelements ausgebildet werden. Außerdem besteht die Möglichkeit, eine stufenweise Filterung durchzuführen, beispielsweise zunächst eine Grobfilterung und anschließend eine Feinfilterung, indem die Poren in den äußeren Lagen größer gewählt werden als die Poren in den inneren Lagen.

In einer weiteren vorteilhaften Ausgestaltung des Filterelements sind die porösen Lagen so gegeneinander versetzt angeordnet, dass das strömende Medium bei der Durchquerung des Siebs mindestens einmal die Richtung wechselt. Dadurch kann verhindert werden, dass schmale, länglich geformte Partikel durch die Poren des Siebs hindurchrutschen können. So können auch Partikel abgeschieden werden, die beispielsweise durch einen Spalt- oder Stabfilter nicht sicher zurückgehalten werden. Ein weiterer Vorteil ist, dass die Partikel vorzugsweise vor dem Filter abgeschieden werden und sich nicht in dem Filter ansammeln, wie es beispielsweise bei dem Spalt- oder Stabfilter der Fall ist. So können die abgeschiedenen Partikel leichter von der Oberfläche des Filters weggespült werden und kann ein Verstopfen des Filters verhindert werden.

In einer weiteren vorteilhaften Ausgestaltung des Filterelements umfasst das Sieb mindestens eine Lage, die aus einem Drahtgewebe besteht. Dies hat den Vorteil einer hohen Stabilität und Haltbarkeit bei hohen Druckbelastungen und eines geringen Durchflusswiderstands und Druckabfalls bei guter Filterwirkung. Durch die Maschenweite des Drahtgewebes kann die Größe der Poren und somit die Größe der zu filternden Partikel einfach festgelegt werden.

In einer weiteren vorteilhaften Ausgestaltung des Filterelements sind die aneinandergrenzenden porösen Lagen des Siebs und/oder die sich berührenden Drähte in dem Drahtgewebe stoffschlüssig miteinander verbunden. Dadurch entsteht ein kompaktes Material das sehr leicht zu verarbeiten ist, zum Beispiel durch Umformen, Ausstanzen oder Schweißen, und das sehr robust und besonders haltbar ist. Die stoffschlüssige Verbindung kann beispielsweise durch Sintern hergestellt werden. Die stoffschlüssige Verbindung der aneinandergrenzenden porösen Lagen oder der sich berührenden Drähte in dem Drahtgewebe stellt außerdem sicher, dass sich die verschiedenen Lagen des Siebs oder die Drähte des Drahtgewebes nicht gegeneinander verschieben und so die Filtereigenschaften verändern. Durch die hohe Stabilität und Robustheit des Materials ist ein solches Filterelement besonders geeignet für Anwendungen, bei denen mit sehr hohen Drücken und/oder schnell wechselnden Drücken gearbeitet wird, das Filterelement also hohen statischen und/oder dynamischen Belastungen standhalten muss.

Gemäß eines zweiten Aspekts der Erfindung zeichnet sich die Erfindung aus durch eine Filtervorrichtung, die einen Strömungskanal und mindestens ein Filterelement umfasst, das so in dem Strömungskanal angeordnet ist, dass das strömende Medium durch das Filterelement strömt. Der Strömungskanal ist anströmseitig des Filterelements ausgebildet zum Erzeugen einer tangentialen Strömungskomponente auf einer anströmseitigen Oberfläche des Filterelements. Der Vorteil ist, dass an der Oberfläche des Filterelements abgeschiedene Partikel von dieser weggespült werden und die Oberfläche des Filterelements auf diese Weise partikelarm gehalten wird. Die abgeschiedenen Partikel sammeln sich bevorzugt in einer durch die tangentiale Strömungskomponente vorgegebenen Richtung oder in einem vorgegebenen Bereich oder werden in der Schwebe gehalten und daran gehindert, sich auf der Oberfläche des Filterelements abzusetzen, solange das Medium strömt. Dadurch wird ein dauerhaft geringer Durchflusswiderstand und Druckabfall über dem Filterelement erreicht. Außerdem wird wenig Platz für das Filterelement benötigt, da aufgrund einer geringeren Verstopfungsgefahr weniger zusätzliche Filteroberfläche vorgehalten werden muss, um einen dauerhaft guten Durchfluss zu ermöglichen.

In einer vorteilhaften Ausgestaltung der Filtervorrichtung ist in dem Strömungskanal anströmseitig des Filterelements mindestens eine Leitvorrichtung ausgebildet, die das strömende Medium in eine vorgegebene Richtung leitet. Dadurch kann die Strömung gezielt geführt werden und an die vorgegebene räumliche Anordnung des Filterelements im Strömungskanal angepasst werden.

In diesem Zusammenhang ist es vorteilhaft, wenn die Leitvorrichtung als ein Gewinde oder eine schraubenförmige Riefe ausgebildet ist. Ein solches Gewinde oder eine Riefe ist einfach und billig herstellbar. Das strömende Medium wird in eine rotatorische Bewegung versetzt, die die abgeschiedenen Partikel bevorzugt in der Schwebe hält oder in den Randbereich drängt.

In einer weiteren vorteilhaften Ausgestaltung der Filtervorrichtung umfasst die Leitvorrichtung mindestens ein Leitblech. Ein solches Leitblech ist einfach und billig herstellbar und bietet viele Möglichkeiten einer Strömungsführung. Durch die geeignete Anordnung mehrerer Leitbleche kann auch eine komplexe Strömungsführung erreicht werden.

In einer weiteren vorteilhaften Ausgestaltung der Filtervorrichtung umfasst die Leitvorrichtung eine Blende mit mindestens einer Ausnehmung. Diese hat den Vorteil, dass sie einfach und billig herstellbar ist und auf einfache Weise eine Strömungsführung ermöglicht.

In diesem Zusammenhang ist es vorteilhaft, wenn die Ausnehmung in der Blende exzentrisch angeordnet ist. Dadurch entsteht eine von der Ausnehmung in der Blende ausgehende Querströmung an der Oberfläche des Filterelements, die an der Oberfläche des Filterelements abgeschiedene Partikel wegspült. Es können Wirbelströmungen zwischen der Blende und dem Filterelement entstehen, die ein Absetzen der Partikel auf der Oberfläche des Filterelements verhindern oder das Sammeln der Partikel in dem vorgegebenen Bereich begünstigen und so einen hohen Durchfluss durch das Filterelement gewährleisten.

In einer weiteren vorteilhaften Ausgestaltung der Filtervorrichtung ist die Leitvorrichtung düsenförmig ausgebildet. Dadurch wird das strömende Medium beschleunigt und verstärkt so die Spülwirkung des strömenden Mediums an der Oberfläche des Filterelements.

In einer weiteren vorteilhaften Ausgestaltung der Filtervorrichtung ist anströmseitig ein Gitter zum Erzeugen von turbulenten Strömungen angeordnet. Ein solches Gitter ist einfach und billig herstellbar und die in dem strömenden Medium erzeugte turbulente Strömung wirbelt abgeschiedene Partikel auf und verhindert deren Absetzen auf der Oberfläche des Filterelements.

In einer weiteren vorteilhaften Ausgestaltung der Filtervorrichtung ist anströmseitig mindestens eine taschenförmige Ausnehmung in dem Strömungskanal ausgebildet. Dies hat den Vorteil, dass abgeschiedene Partikel in die taschenförmige Ausnehmung gespült werden können, so dass diese den Durchfluss durch das Filterelement nicht beeinträchtigen können. Die wirksame Oberfläche des Filterelements bleibt dadurch dauerhaft erhalten.

Ausführungsbeispiele der Erfindung sind im Folgenden anhand der schematischen Zeichnungen erläutert. Es zeigen:
Figur 1 ein Einspritzventil,
Figur 2 ein Filterelement montiert in einem Druckrohrstutzen,
Figur 3 einen Schnitt durch ein Sieb des Filterelements,
Figur 4a, b, c, d, e verschiedene Ausführungsformen des Filterelements,
Figur 5 das Filterelement montiert in einem Strömungskanal,
Figur 6a, b eine Filtervorrichtung mit einer Blende,
Figur 7a, b eine Filtervorrichtung mit zwei Blenden,
Figur 8 eine Variante der Filtervorrichtung mit zwei Blenden,
Figur 9 eine Filtervorrichtung mit einer Düse,
Figur 10 eine Filtervorrichtung mit einem Gitter,
Figur 11 eine weitere Filtervorrichtung, und
Figur 12a, b eine Filtervorrichtung mit einem Leitblech.

Elemente gleicher Konstruktion oder Funktion sind figurenübergreifend mit den gleichen Bezugszeichen versehen. Als Umriss dargestellte Pfeile in den Figuren zeigen eine Hauptströmungsrichtung eines strömenden Mediums.

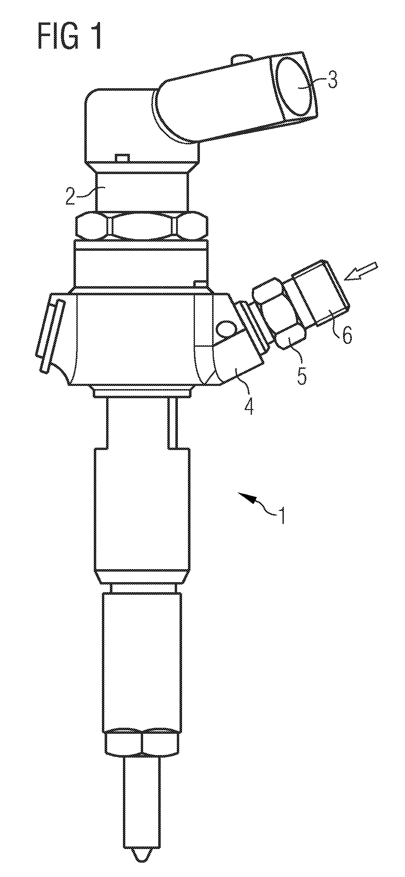

Figur 1 zeigt ein Einspritzventil 1 mit einem Aktor 2 zum Öffnen und Schließen einer Ventilöffnung und einem elektrischen Anschluss 3, über den der Aktor 2 mit elektrischer Energie versorgt werden kann. Ein solches Einspritzventil 1 wird beispielsweise in Brennkraftmaschinen in Kraftfahrzeugen eingesetzt, um Kraftstoff in die Verbrennungsräume der Brennkraftmaschine einzuspritzen. Das Einspritzventil 1 umfasst ferner eine Druckrohrstutzenaufnahme 4, an dem ein Druckrohrstutzen 5 angeordnet ist. Der Druckrohrstutzen 5 umfasst einen Leitungsanschluss 6, durch den dem Einspritzventil 1 Kraftstoff zugeführt werden kann.

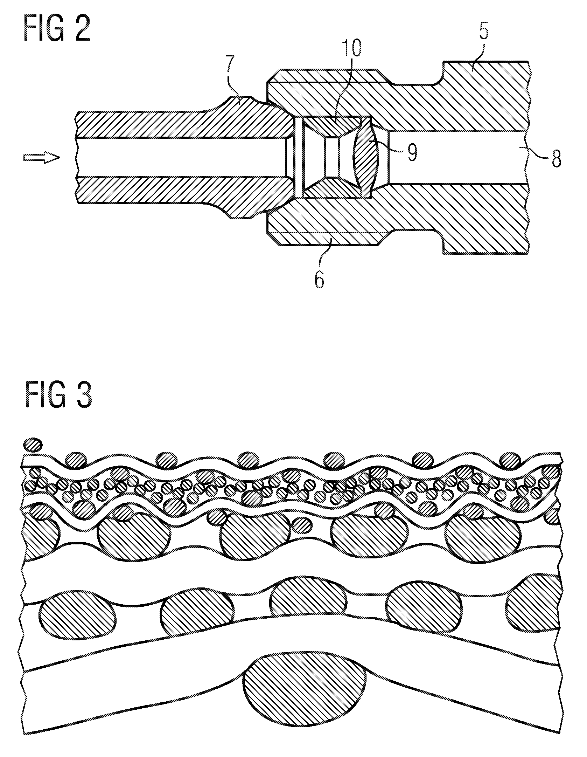

In Figur 2 ist der Druckrohrstutzen 5 im Bereich des Leitungsanschlusses 6 im Schnitt dargestellt. An den Leitungsanschluss 6 ist eine Hochdruckleitung 7 angekoppelt. Die Hochdruckleitung 7 ist beispielsweise mit einem nicht dargestellten Kraftstoffspeicher verbunden, wie er von Common-Rail-Systemen bekannt ist. In den Druckrohrstutzen 5 ist eine durchgehende Bohrung 8 eingebracht, durch die der Kraftstoff von der Hochdruckleitung 7 in das Einspritzventil 1 strömen kann. In der Bohrung 8 ist ein Filterelement 9 angeordnet, das mit einer Büchse 10 in der Bohrung befestigt ist, die in die Bohrung 8 eingepresst ist. Das Filterelement 9 ist so in der Bohrung 8 angeordnet, dass der Kraftstoff durch das Filterelement 9 hindurchströmt. Partikel, die durch den strömenden Kraftstoff mitgeführt werden, werden vor dem Filterelement 9 abgeschieden und können so nicht in das Einspritzventil 1 gelangen.

Das Filterelement 9 umfasst ein Sieb, das vorzugsweise eine große Anzahl von kleinen Poren aufweist. Das Sieb ist vorzugsweise so ausgebildet, dass ein vorgegebener Prozentsatz aller Partikel in dem Kraftstoff, beispielsweise 95 Prozent, von dem Sieb zurück gehalten werden, die größer sind als eine vorgegebene Größe, beispielsweise 30 Mikrometer. Eine effektiv durchströmte Fläche des Siebs, und somit auch ein Durchflusswiderstand des Siebs, ist abhängig von der Anzahl und den Abmessungen der Poren in dem Sieb. Je größer die Anzahl der Poren oder je größer die Abmessungen der Poren, desto kleiner ist der Durchflusswiderstand, oder anders ausgedrückt: je größer eine effektiv durchströmte Fläche ist, desto kleiner ist der Durchflusswiderstand. Der Durchflusswiderstand des Siebs wird im Laufe der Zeit größer, wenn Partikel Poren des Siebs verstopfen und dadurch die effektiv durchströmte Fläche kleiner wird.

In Figur 3 ist ein Schnitt durch ein gesintertes 5-lagiges Drahtgewebe dargestellt. Das Sieb des Filterelements 9 ist vorzugsweise aus einem solchen mehrlagigen Drahtgewebe hergestellt. Einzelne Gewebelagen des Drahtgewebes können unterschiedliche Funktionen haben. Stützlagen können vorgesehen sein, um die Stabilität und Steifigkeit des Filterelements 9 zu erhöhen, und Filterlagen können vorgesehen sein, um abhängig von der Porengröße der jeweiligen Filterlage Partikel aus dem strömenden Medium heraus zu filtern. Eine Filterwirkung des Filterelements 9, d.h. ein Abscheidegrad von Partikeln aus dem strömenden Medium, ist besonders groß, wenn mindestens zwei Gewebelagen so gegeneinander versetzt angeordnet sind, dass jede Pore einer Gewebelage teilweise durch einen Draht einer anderen Gewebelage verdeckt ist. Auf diese Weise wechselt der strömende Kraftstoff auf seinem Weg durch das Filterelement 9 mindestens einmal die Richtung. Lange, dünne Partikel, die eine Pore einer einzelnen Gewebelage passieren können, können so daran gehindert werden, durch das Filterelement hindurchgespült zu werden, da die Partikel dem Wechsel der Flussrichtung nicht folgen können. Vorzugsweise sind mindestens drei Gewebelagen so übereinander angeordnet, dass die Flussrichtung des Kraftstoffs durch das Drahtgewebe mindestens zwei Mal wechselt.

Das Drahtgewebe kann durch die Kombination verschiedener Gewebelagen entsprechend den Anforderungen angepasst werden. Neben der Steifigkeit, dem Abscheidegrad und der Abmessungen der Poren kann auch der Durchflusswiderstand beeinflusst werden. Vorzugsweise wird das Drahtgewebe so ausgebildet, dass der Durchflusswiderstand des Filterelements, und damit auch ein Druckabfall über dem Filterelement, gering ist.

Die Gewebelagen können symmetrisch zueinander angeordnet sein, so dass die Filterwirkung des Filterelements 9 unabhängig von einer Durchströmrichtung des Kraftstoffs ist.

Das Drahtgewebe ist vorzugsweise aus Metalldrähten gewebt. Nachdem die Lagen übereinander angeordnet sind, werden die sich berührenden Drähte und Gewebelagen vorteilhafterweise stoffschlüssig miteinander verbunden, beispielsweise durch Sintern. Das Drahtgewebe ist dadurch besonders kompakt, robust, haltbar und einfach verarbeitbar. Filterelemente können beispielsweise einfach aus dem Drahtgewebe ausgestanzt werden und sind umformbar, z.B. durch Prägen, und schweißbar. Die Filterelemente können dadurch billig hergestellt werden.

Alternativ kann das Filterelement 9 aus einem Blech hergestellt sein, in das eine große Anzahl kleiner Bohrungen eingebracht ist, z.B. durch Laserbohren, Ätzen oder durch elektrochemische Verfahren. Ebenso ist es möglich, das Filterelement 9 aus einer Kombination eines solchen Blechs und des Drahtgewebes herzustellen. Das Blech kann beispielsweise als eine Lage in dem Drahtgewebe angeordnet und vorzugsweise stoffschlüssig mit diesem verbunden sein, z.B. als Stützlage zum Vergrößern der Stabilität.

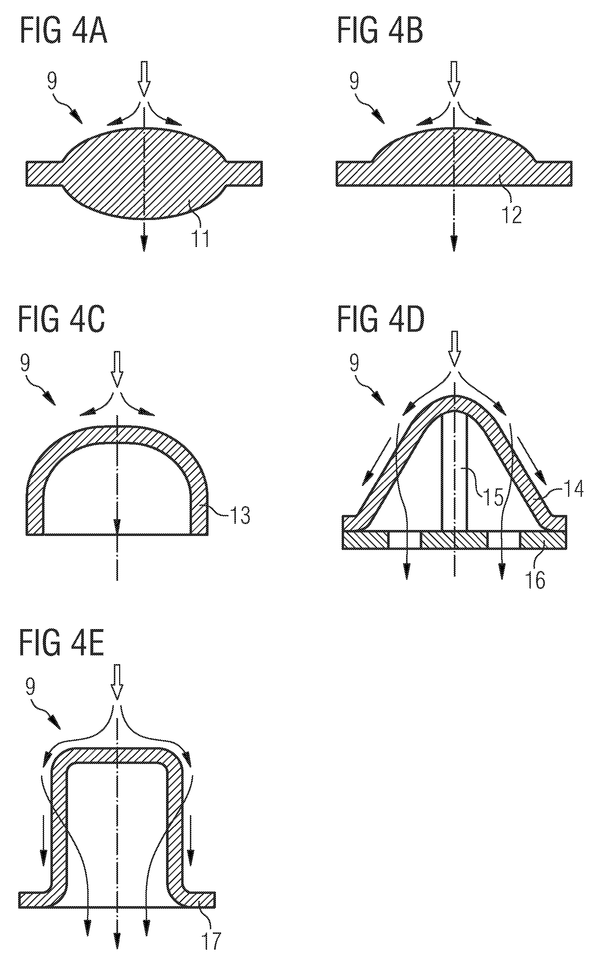

In Figur 4 sind mehrere Ausführungsformen des Filterelements 9 dargestellt. Das in Figur 4a gezeigte Filterelement 9 hat ein beidseitig gewölbtes Sieb 11. Das beidseitig gewölbte Sieb 11 ist rotationssymmetrisch ausgebildet und ist außerdem symmetrisch zu einer Ebene senkrecht zu der Rotationsachse. Das beidseitig gewölbte Sieb 11 hat den Vorteil, dass bei der Montage eine Durchflussrichtung nicht beachtet werden muss. Das beidseitig gewölbte Sieb 11 kann jedoch auch unsymmetrisch ausgebildet sein. Figur 4b zeigt ein einseitig gewölbtes Sieb 12.

In Figur 4c ist ein U-förmiges Sieb 13 gezeigt, das entweder rotationssymmetrisch ausgebildet ist oder senkrecht zur dargestellten Schnittebene gleichförmig weiter ausgebildet ist.

Figur 4d zeigt ein kegelförmiges Sieb 14. Das Filterelement 9 umfasst neben dem kegelförmigen Sieb 14 eine Stütze 15, die beispielsweise an einem geschlitzten Ring 16 angeordnet ist und das kegelförmige Sieb 14 mittig abstützt. Dadurch kann die Stabilität und Haltbarkeit des Filterelements 9 erhöht werden, insbesondere wenn das Filterelement 9 hohen und wechselnden Drücken ausgesetzt ist. Die effektive Oberfläche des Filterelements 9 kann sehr groß sein.

Figur 4e zeigt ein becherförmiges Sieb 17, das eine im Wesentlichen zylinderförmige Mantelfläche umfasst, dessen anströmseitiges Ende einen Boden aufweist. Sowohl in dem Boden als auch in der Mantelfläche können Poren ausgebildet sein, so dass das becherförmige Sieb 17 sowohl axial als auch radial durchströmt werden kann. Die effektive Oberfläche des Filterelements 9 kann dadurch besonders groß sein. Alternativ kann das becherförmige Sieb 17 auch so ausgebildet sein, dass es entweder axial oder radial durchströmt werden kann.

Die in Figur 4 dargestellten Ausführungsbeispiele des Filterelements 9 zeichnen sich dadurch aus, dass ihre anströmseitige Oberfläche in einem inneren Bereich gegenüber einem Randbereich erhaben ausgebildet ist. Partikel, die von dem strömenden Kraftstoff mitgeführt werden oder die sich auf der Oberfläche des Filterelements abgesetzt haben, werden durch die Strömung von dem inneren, erhaben ausgebildeten Bereich weg hin zu dem Randbereich gespült. Die abgeschiedenen Partikel sammeln sich deshalb bevorzugt in dem Randbereich des Filterelements 9 und behindern so nicht den Durchfluss durch das Filterelement 9 in dem inneren Bereich.

Das Filterelement 9 kann beispielsweise auch weitere Bauelemente umfassen, z.B. Ringe, in die das Sieb eingefasst ist. Diese erleichtern die Montage des Filterelements 9 und/oder vergrößern dessen Stabilität.

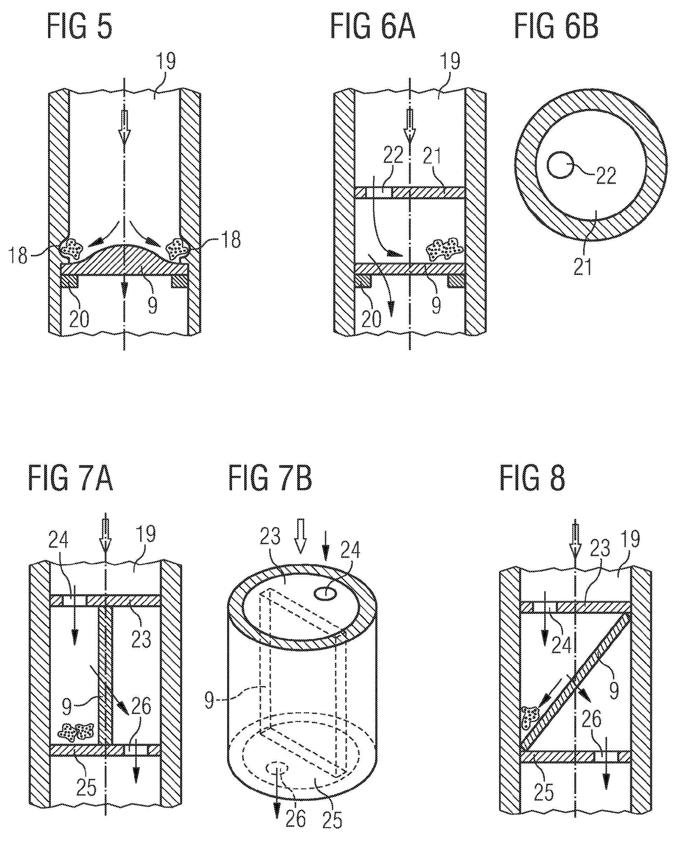

Eine taschenförmige Ausnehmung 18 (Figur 5) kann in einem Strömungskanal 19 vorgesehen sein, die beispielsweise als eine ringförmige Nut anströmseitig des Filterelements 9 in dem Strömungskanal 19 ausgebildet ist. Die taschenförmige Ausnehmung 18 bildet einen Totraum oder ein Absetzvolumen, in dem sich Partikel sammeln, da die Strömung in der taschenförmigen Ausnehmung 18 kleiner ist als im übrigen Querschnitt des Strömungskanals 19. Die abgeschiedenen Partikel werden von der Strömung in Richtung des Randbereichs gespült und bevorzugt in der taschenförmigen Ausnehmung 18 gesammelt. Dadurch wird die Oberfläche des Filterelements 9 weitgehend frei von Partikeln gehalten. Der Durchflusswiderstand kann so dauerhaft klein gehalten werden.

Der Strömungskanal 19, in dem das Filterelement 9 angeordnet ist, kann die Bohrung 8 in dem Druckrohrstutzen 5 sein. Ebenso kann der Strömungskanal 19 beispielsweise innerhalb des Einspritzventils 1, der Hochdruckleitung 7, dem Kraftstoffspeicher oder in einer Kraftstoffpumpe angeordnet sein. Das Filterelement 9 ist in dem Strömungskanal 19 befestigt mit einem Pressring 20, der abströmseitig des Filterelements 9 in den Strömungskanal 19 eingepresst ist.

Alternativ oder zusätzlich zu der besonderen Ausgestaltung des Filterelements 9 kann eine Filtervorrichtung, die den Strömungskanal 19 und das Filterelement 9 umfasst, ausgebildet sein zum Erzeugen einer tangentialen Strömungskomponente auf der anströmseitigen Oberfläche des Filterelements 9. In dem Strömungskanal 19 ist anströmseitig des Filterelements 9 mindestens eine Leitvorrichtung vorgesehen, die so angeordnet ist, dass die Strömung an der Oberfläche des Filterelements 9 eine tangentiale Komponente erhält. Das Filterelement 9 muss bei geeigneter Anordnung der Leitvorrichtung nicht notwendig wie zuvor beschrieben ausgebildet sein, d.h. das Filterelement 9 kann beispielsweise auch eben, also nicht erhaben, ausgebildet sein.

Figur 6a und b zeigen eine Blende 21 mit einer Blendenausnehmung 22, die als Leitvorrichtung anströmseitig des Filterelements 9 in dem Strömungskanal 19 angeordnet ist. Vorzugsweise ist die Blendenausnehmung 22 exzentrisch in der Blende 21 angeordnet. Die Strömung ist in einem Bereich unmittelbar stromabwärts der Blendenausnehmung 22 am stärksten und bewirkt zwischen der Blende 21 und dem Filterelement 9 eine Strömungskomponente, die von dem Bereich stromabwärts der Blendenausnehmung 22 weggerichtet ist. Dadurch werden abgeschiedene Partikel bevorzugt in einem Bereich des Filterelements 9 gesammelt, in dem die Strömung schwächer ist, also in dem Bereich, der den größten Abstand von der Blendenausnehmung 22 aufweist.

Figur 7a und b zeigen eine Filtervorrichtung, in der das Filterelement 9 parallel zu einer Längsachse des Strömungskanals 19 angeordnet ist. Anströmseitig des Filterelements 9 und senkrecht zu der Längsachse des Strömungskanals 19 ist eine erste Blende 23 mit einer ersten Blendenausnehmung 24 angeordnet. Abströmseitig des Filterelements 9 und ebenfalls senkrecht zu der Längsachse des Strömungskanals 19 ist eine zweite Blende 25 mit einer zweiten Blendenausnehmung 26 angeordnet. Die Filtervorrichtung ist so ausgebildet, dass der Kraftstoff durch die erste Blendenausnehmung 24, durch das Filterelement 9 und anschließend durch die zweite Blendenausnehmung 26 hindurchströmt. An der anströmseitigen Oberfläche des Filterelements 19 bildet sich eine tangentiale Strömungskomponente, die abgeschiedene Partikel stromabwärts der ersten Blendenausnehmung 24 sammelt.

Figur 8 zeigt eine Variante der in Figur 7 dargestellten Filtervorrichtung. Das Filterelement 9 ist schräg zu der Längsachse des Strömungskanals 19 zwischen der ersten Blende 23 und der zweiten Blende 25 angeordnet. Die in Figur 7 und Figur 8 dargestellten Filtervorrichtungen haben den Vorteil, dass die wirksame Oberfläche des Filterelements 9 sehr groß sein kann gegenüber einem Filterelement 9, das senkrecht zu der Längsachse des Strömungskanals 19 angeordnet ist.

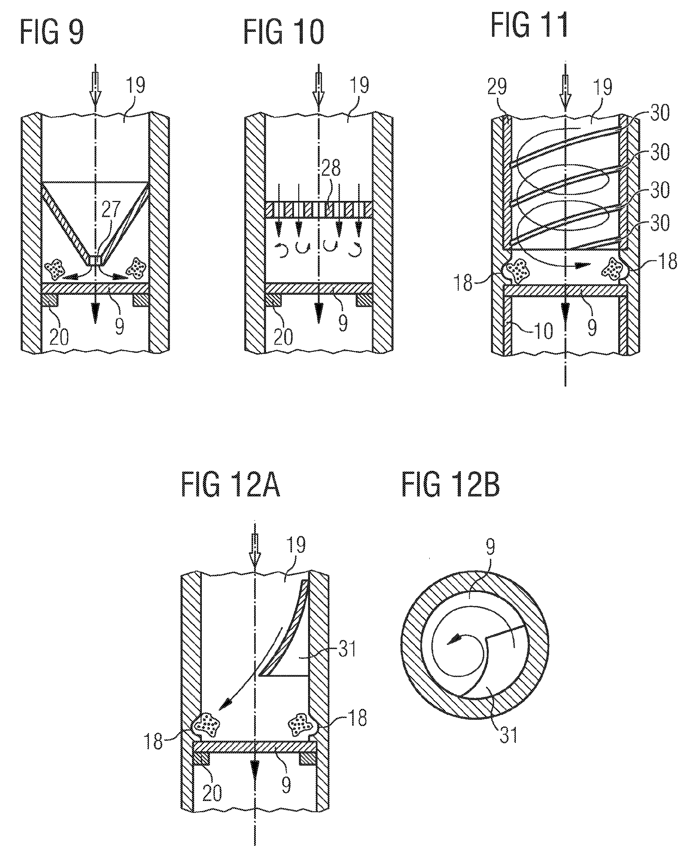

Figur 9 zeigt eine weitere Filtervorrichtung, in deren Strömungskanal 19 anströmseitig des Filterelements 9 eine Düse 27 angeordnet oder ausgebildet ist. Durch die Düse 27 wird der strömende Kraftstoff beschleunigt und auf einen bestimmten Bereich des Filterelements 9 konzentriert, vorzugsweise auf die Mitte des Filterelements 9. Der beschleunigte Kraftstoff spült abgeschiedene Partikel in Richtung des Randbereichs, so dass die Oberfläche des Filterelements 9 unterhalb der Düse 27 weitgehend frei von Partikeln bleibt.

In der in Figur 10 dargestellten Filtervorrichtung ist anströmseitig des Filterelements 9 ein Gitter 28 angeordnet. Das Gitter 28 ist so ausgebildet, dass sich in dem strömenden Kraftstoff Wirbel oder Turbulenzen bilden. Die Wirbel oder Turbulenzen lösen abgeschiedene und auf der anströmseitigen Oberfläche des Filterelements 9 abgesetzte Partikel und halten diese in Schwebe. Ein erneutes Absetzen auf der Oberfläche des Filterelements 9 kann so verhindert werden, solange die turbulente Strömung aufrechterhalten wird. Dadurch bleibt der Durchflusswiderstand klein, da ein Verstopfen der Poren in dem Filterelement 9 verhindert wird.

In Figur 11 ist eine Filtervorrichtung dargestellt, in der anströmseitig des Filterelements 9 eine Hülse 29 in dem Strömungskanal 19 angeordnet ist. In der Hülse 29 sind Riefen 30 ausgebildet. Die Riefen 30 sind schräg zu der Längsachse des Strömungskanals 19 ausgebildet, vorzugsweise schraubenförmig.

Der durchströmende Kraftstoff erhält so einen Drall, d.h. eine rotatorische Komponente. Dadurch werden zum einen abgeschiedene Partikel durch die Zentrifugalkräfte in den Randbereich des Filterelements 9 und gegebenenfalls in die taschenförmigen Ausnehmungen 18 gespült. Andererseits verhindert die zirkulierende Strömung das Absetzen der abgeschiedenen Partikel auf der Oberfläche des Filterelements 9, d.h. die abgeschiedenen Partikel werden in Schwebe gehalten und können so die Poren des Siebs in dem Filterelement 9 nicht verstopfen. Die Riefen 30 können auch als ein Gewinde ausgebildet sein. Die Riefen 30 können auch in der Bohrung 8, die den Strömungskanal 19 bildet, ausgebildet sein anstelle in der Hülse 29. Die Hülse 29 hat jedoch den Vorteil, dass sie einfach und billig herstellbar ist. Verschieden ausgebildete Leitvorrichtungen können in Form der Hülse 29 einfach bereitgehalten werden und bei Bedarf in dem Strömungskanal 19 montiert werden, beispielsweise durch Einpressen.

Figur 12a und b zeigen eine weitere Möglichkeit, in der Strömung eine rotatorische Komponente auszubilden. In dem Strömungskanal 19 ist anströmseitig des Filterelements 9 ein Leitblech 31 angeordnet, das so ausgebildet ist, dass der strömende Kraftstoff einen Drall erhält. Das Leitblech 31 kann beispielsweise in dem Strömungskanal 19 angeschweißt sein oder durch eine geschlitzte Hülse mit einer nach innen gebogenen Ecke einfach und billig hergestellt werden.

Die Riefen 30 können beispielsweise auch durch ein schraubenförmig in dem Strömungskanal 19 angeordnetes Leitblech 31 ersetzt werden. Die rotatorische Komponente in der Strömung ist dadurch stärker ausgeprägt.

Durch Leitbleche 31 kann die Strömung in dem Strömungskanal 19 gezielt geführt werden und eignet sich deshalb nicht nur zum Erzeugen zirkulierender Strömungen.

Eine stoßartige Strömung, die beispielsweise verursacht wird durch zyklische Einspritzvorgänge des Einspritzventils 1, kann die spülende Wirkung des strömenden Kraftstoffs, die die anströmseitige Oberfläche des Filterelements 9 weitgehend frei von Partikeln hält, zusätzlich zu den beschriebenen konstruktiven Maßnahmen verstärken. In dem Filterelement 9 festgesetzte Partikel können durch diese stoßartige Strömung gelöst werden. Die zirkulierende oder turbulente Strömung verhindert ein erneutes Absetzen und Verstopfen des Filterelements 9. Auf das Absetzvolumen für die abgeschiedenen Partikel kann gegebenenfalls verzichtet werden, wenn abgeschiedene Partikel in der Schwebe gehalten und am Absetzen auf dem Filterelement 9 gehindert werden. Die Filtervorrichtung kann deshalb kleiner und kompakter ausgebildet sein.

Das Filterelement 9 kann auf verschiedene Weise in dem Strömungskanal 19 befestigt sein, beispielsweise durch Einpressen, Schweißen, Bördeln oder mittels des Pressrings 20, der Büchse 10, der Hülse 29, einem Federring oder einem Sprengring.

Die offenbarten Filterelemente 9 sowie die offenbarten Filtervorrichtungen sind geeignet, andere strömende Medien zu filtern. Die Filterelemente 9 und Filtervorrichtungen sind ebenso für andere hydraulische oder pneumatische Anwendungen geeignet, insbesondere in Ventilen, Pumpen, Leitungen oder Messinstrumenten.

## Patentansprüche

1. Filterelement (9) mit einem Sieb zum Abscheiden von festen Partikeln aus strömenden Medien, **dadurch gekennzeichnet, dass** ein innerer Bereich einer anströmseitigen Oberfläche des Siebs gegenüber einem Randbereich der anströmseitigen Oberfläche des Siebs entgegen einer Strömungsrichtung des strömenden Mediums erhaben ausgebildet ist.

2. Filterelement (9) nach Anspruch 1, **dadurch gekennzeichnet, dass** das Sieb in axialer und/oder in radialer Richtung symmetrisch ausgebildet ist.

3. Filterelement (9) nach einem der Ansprüche 1 oder 2, **dadurch gekennzeichnet, dass** die anströmseitige Oberfläche des Siebs gewölbt ausgebildet ist.

4. Filterelement (9) nach einem der Ansprüche 1 oder 2, **dadurch gekennzeichnet, dass** die anströmseitige Oberfläche des Siebs kegelförmig ausgebildet ist.

5. Filterelement (9) nach einem der Ansprüche 1 oder 2, **dadurch gekennzeichnet, dass** die anströmseitige Oberfläche des Siebs becherförmig ausgebildet ist.

6. Filterelement (9) nach einem der vorstehenden Ansprüche, **dadurch gekennzeichnet, dass** das Sieb mindestens zwei poröse Lagen umfasst.

7. Filterelement (9) nach einem der vorstehenden Ansprüche, **dadurch gekennzeichnet, dass** die porösen Lagen so gegeneinander versetzt angeordnet sind, dass das strömende Medium bei der Durchquerung des Siebs mindestens ein Mal die Richtung wechselt.

8. Filterelement (9) nach einem der Ansprüche 6 oder 7, **dadurch gekennzeichnet, dass** das Sieb mindestens eine Lage umfasst, die aus einem Drahtgewebe besteht.

9. Filterelement (9) nach Anspruch 6 bis 8, **dadurch gekennzeichnet, dass** die aneinandergrenzenden porösen Lagen des Siebs und/oder die sich berührenden Drähte in dem Drahtgewebe stoffschlüssig miteinander verbunden sind.

10. Filtervorrichtung, die umfasst
- einen Strömungskanal (19) und
- mindestens ein Filterelement (9) nach einem der vorstehenden Ansprüche, das so in dem Strömungskanal (19) angeordnet ist, dass das strömende Medium durch das Filterelement (9) strömt,
**dadurch gekennzeichnet, dass**
der Strömungskanal (19) anströmseitig des Filterelements (9) ausgebildet ist zum Erzeugen einer tangentialen Strömungskomponente auf einer anströmseitigen Oberfläche des Filterelements (9).

11. Filtervorrichtung nach Anspruch 10, **dadurch gekennzeichnet, dass** in dem Strömungskanal anströmseitig des Filterelements (9) mindestens eine Leitvorrichtung ausgebildet ist, die das strömende Medium in eine vorgegebene Richtung leitet.

12. Filtervorrichtung nach Anspruch 11, **dadurch gekennzeichnet, dass** die Leitvorrichtung als ein Gewinde oder eine schraubenförmige Riefe (30) ausgebildet ist.

13. Filtervorrichtung nach Anspruch 11, **dadurch gekennzeichnet, dass** die Leitvorrichtung mindestens ein Leitblech (31) umfasst.

14. Filtervorrichtung nach Anspruch 11, **dadurch gekennzeichnet, dass** die Leitvorrichtung eine Blende (21) mit mindestens einer Ausnehmung umfasst.

15. Filtervorrichtung nach Anspruch 14, **dadurch gekennzeichnet, dass** die Ausnehmung in der Blende (21) exzentrisch angeordnet ist.

16. Filtervorrichtung nach Anspruch 11, **dadurch gekennzeichnet, dass** die Leitvorrichtung düsenförmig ausgebildet ist.

17. Filtervorrichtung nach einem der Ansprüche 10 bis 16, **dadurch gekennzeichnet, dass** anströmseitig ein Gitter zum Erzeugen von turbulenten Strömungen angeordnet ist.

18. Filtervorrichtung nach einem der Ansprüche 10 bis 17, **dadurch gekennzeichnet, dass** anströmseitig mindestens eine taschenförmige Ausnehmung (18) in dem Strömungskanal (19) ausgebildet ist.
